# EUROPEAN PATENT SPECIFICATION

(11) **EP 4 617 819 B1**
(45) Date of publication and mention of the grant of the patent: **16.09.2026**
(21) Application number: 25157549.4
(22) Date of filing: 13.02.2025
(51) Int. Cl.: G05D 7/06

(54) **CONTROL UNIT FOR FLUID CONTROL DEVICE, FLUID CONTROL DEVICE, FLUID CONTROL METHOD, AND FLUID CONTROL PROGRAM**
STEUEREINHEIT FÜR EINE FLUIDSTEUERUNGSVORRICHTUNG, FLUIDSTEUERUNGSVORRICHTUNG, FLUIDSTEUERUNGSVERFAHREN UND FLUIDSTEUERUNGSPROGRAMM
UNITÉ DE COMMANDE POUR DISPOSITIF DE COMMANDE DE FLUIDE, DISPOSITIF DE COMMANDE DE FLUIDE, PROCÉDÉ DE COMMANDE DE FLUIDE ET PROGRAMME DE COMMANDE DE FLUIDE

(30) Priority: 13.03.2024 JP 2024039225
(43) Date of publication of application: 17.09.2025
(73) Proprietor: Horiba Stec, Co., Ltd., Kyoto-shi, Kyoto 601-8116 (JP)
(72) Inventor: HAMADA, Chihiro, Kyoto-shi, Kyoto (JP); HAYASHI, Daisuke, Kyoto-shi, Kyoto (JP)
(74) Representative: Müller-Boré & Partner Patentanwälte PartG mbB

(56) References cited:
- WO-A1-2023/013381
- US-A1- 2016 124 440
- US-A1- 2022 163 984

## Description

### BACKGROUND OF THE INVENTION

### 1. TECHNICAL FIELD

The present invention relates to a a control unit for a fluid control device, a fluid control device, a fluid control method, and a fluid control program.

### 2. DESCRIPTION OF THE RELATED ART

Conventionally, a fluid control device (i.e., a mass flow controller) is used in order to control a flow rate of a fluid flowing through a flow path. As is shown in Patent Document 1, this fluid control device is provided with a fluid control valve and a flow rate sensor, and is formed so as to perform feedback control of the fluid control valve based on a deviation between a measurement flow rate obtained by the flow rate sensor, and a set flow rate.

However, in a case in which the flow rate sensor is a thermal flow rate sensor, because the response speed of a thermal flow rate sensor is slower than that of a pressure flow rate sensor, the fluid control response time is longer. Moreover, because of hysteresis, deterioration over time, or peripheral heat effects or the like, the valve aperture of a fluid control valve changes even if the same drive voltage is applied thereto. As a result, the control parameter conditions change and overshoot, for example, may be generated in the fluid control so that it becomes difficult for accurate flow rate control to be performed.

Note that, as is shown in Patent Document 2, a flow rate control device in which an observer having an estimation model that estimates the flow rate passing through a downstream-side valve is employed may be considered, however, this equates to nothing more than simply estimating the flow rate passing through the downstream-side valve, and does not take into account any flow rate errors caused by the flow rate sensor response speed or by changes in the fluid control valve.

### [Prior Art Document]

### [Patent Document]

Patent Document 1: Japanese Patent Application Laid-Open No. 2020-140292
Patent Document 2: Japanese Patent Application Laid-Open No. 2022-83378

US 2022/163984 A1 describes that a flow rate control apparatus includes: a downstream-side valve flow rate meter that measures a downstream-side valve flow rate that is a flow rate of a fluid passing through a downstream-side valve; and an observer including a downstream-side valve flow rate estimation model that estimates the downstream-side valve flow rate on the basis of an input parameter that changes an opening degree of the downstream-side valve. The observer is configured so as to be fed back a deviation between the measured value of the downstream-side valve flow rate and the estimated value of the downstream-side valve flow rate.

US 2016/124440 A1 describes that a flow-rate control unit is constituted by a sensor model storage unit, a flow-rate simulation value output unit that outputs a flow-rate simulation value which is a flow-rate value that the sensor model outputs when a flow-rate setting value is input, a feedback control unit that outputs a flow-rate feedback value based on a deviation between a flow-rate measurement value and the flow-rate simulation value, and a valve control unit that controls a valve application voltage that is applied to a valve based on the flow-rate feedback value and a flow-rate feedforward value that is calculated from the flow-rate setting value, and the flow-rate simulation value output unit is configured to output the flow-rate simulation value in a state where a predetermined time delay exists with respect to the flow-rate setting value.

### SUMMARY OF THE INVENTION

The present invention was, therefore, conceived in order to solve the above-described problem, and it is a principal object thereof to enable highly accurate flow rate control to be performed at the same time as a fast response is achieved.

The present invention is defined in independent claims. A control unit according to the present invention is defined in independent claim 1. A fluid control device according to the present invention is defined in independent claim 3.

According to the present invention, by employing an observer having a valve model that estimates a valve flow rate, which is a flow rate of a fluid control valve, and a flow rate sensor model that simulates a flow rate sensor, it is possible to achieve a fast response. Moreover, because both a flow rate error estimation value, which is an estimation of a flow rate error caused by a change in the fluid control valve, and a model error estimation value, which is an estimation of a model error in the flow rate sensor model relative to the flow rate sensor, are respectively determined, and the model error estimation value is input into the flow rate sensor model, and because an estimation value is output based on the flow rate error estimation value and on the valve flow rate estimation value output by the valve model, it is possible to accurately compensate both a flow rate error caused by a change in the fluid control valve, and a model error in the flow rate sensor model relative to the flow rate sensor. As a result, it is possible to perform highly accurate flow rate control while simultaneously achieving a fast response time.

As a specific aspect of the observer, it is desirable that the observer be provided with a first observer gain portion that multiplies a deviation between the flow rate measurement value output by the flow rate sensor and the flow rate estimation value output by the flow rate sensor model by a first observer gain, and then outputs the error estimation value, and with a second observer gain portion that multiplies a deviation between the flow rate measurement value output by the flow rate sensor and the flow rate estimation value output by the flow rate sensor model by a second observer gain, and then outputs the model error estimation value.

It is also desirable that the fluid control device of the present invention be further provided with a valve model update portion that updates the valve model of the observer.

If this type of structure is employed, then by updating the valve model in order to respond to any deterioration over time in the fluid control valve or to respond to changes brough about by heat or the like, it is possible to reduce any errors between the actual valve and the valve model whenever this might be necessary. As a result, it becomes possible to perform highly accurate flow rate control.

It is desirable that the fluid control valve be a piezo valve that utilizes a piezo stack.

Even if the same drive voltage is applied thereto, the valve aperture of a piezo valve changes because of hysteresis of the piezo stack, deterioration over time, or peripheral heat effects or the like. As is the case in the present invention, by feeding back error estimation values obtained by estimating flow rate errors caused by changes in the fluid control valve, it is possible to accurately compensate flow rate errors generated by the aforementioned hysteresis, deterioration over time, or peripheral heat effects or the like.

It is also desirable that the flow rate sensor be a thermal flow rate sensor.

Because a thermal flow rate sensor has a slower response speed compared to a pressure flow rate sensor, as is the case in the present invention, by performing control using an observer, it is possible to demonstrate an even more remarkable effect in a fluid control device that uses a thermal flow rate sensor.

A fluid control method according to the present invention is defined in independent claim 7.

A fluid control program according to the present invention is defined in independent claim 8.

Note that the fluid control program may be distributed electronically, or may be recorded on a program recording medium such as a CD, DVD, or flash memory stick or the like.

According to the present invention which is defined in any one of the independent claims, it is possible to perform highly accurate flow rate control while simultaneously achieving a fast response.

### BRIEF DESCRIPTION OF THE DRAWINGS

FIG. 1 is a schematic diagram showing the structure of a liquid material vaporization device that incorporates a fluid control device according to an embodiment of the present invention;
FIG. 2 is a schematic diagram showing the structure of a fluid sensor of the same embodiment;
FIG. 3 is a schematic diagram showing the structure of a vaporizer of the same embodiment;
FIG. 4 is a control block diagram showing details of a valve control unit of the same embodiment;
FIG. 5 contains graphs showing response waveforms in a conventional example of flow rate control and in the flow rate control of the present embodiment;
FIG. 6 contains graphs showing partial enlargements of the response waveforms in a conventional example of flow rate control and in the flow rate control of the present embodiment;
FIG. 7 contains graphs showing effects obtained when model error estimation values are fed back into a flow rate sensor model;
FIG. 8 is a graph illustrating how flow rate error estimation values enable flow rate errors that are caused by changes in a fluid control valve to be accurately estimated;
FIG. 9 is a control block diagram showing details of a valve control unit of a variant embodiment; and
FIG. 10 is a schematic diagram showing a fluid control device of a variant embodiment.

### DETAILED DESCRIPTION

Hereinafter, an embodiment of a vaporizer that incorporates a fluid control device according to the present invention will be described with reference to the drawings.

Note that, in order to simplify an understanding thereof, each of the drawings depicted below is shown schematically with omissions or enhancements made where these have been deemed appropriate. In addition, component elements that are the same in the respective drawings are indicated by the same descriptive symbols and any duplicated description thereof is omitted.

A vaporizer 200 according to the present embodiment is used, for example, in a semiconductor manufacturing process, and vaporizes a liquid material (i.e., a raw material liquid) so as to generate a material gas (i.e., a raw material gas) that is supplied to a chamber interior. Note that the fluid control device according to the present embodiment is formed by a liquid flow rate sensor 2, a fluid control valve 3, and a valve control unit 4 that are each described below.

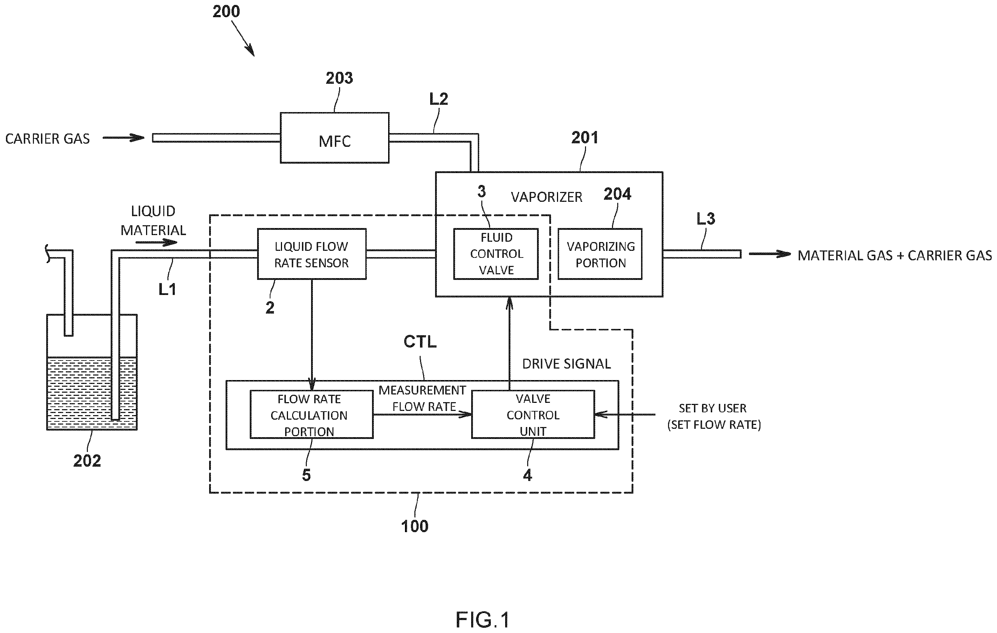

More specifically, as is shown in FIG. 1, the vaporizer 200 is equipped with a vaporizer 201, a liquid material supply line L1 that supplies liquid material to the vaporizer 201, a carrier gas supply line L2 that supplies carrier gas to the vaporizer 201, and a discharge line L3 that discharges a mixture gas formed when the carrier gas and material gas are mixed together from the vaporizer 201. Each instrument provided in the vaporizer 201 and in the respective lines L1 to L3 is controlled by a control unit CTL.

A tank 202 that internally stores a liquid material is connected to one end of the liquid material supply line L1, and the fluid flow rate sensor 2 that measures the flow rate of the liquid material is provided between the tank 202 and the vaporizer 201.

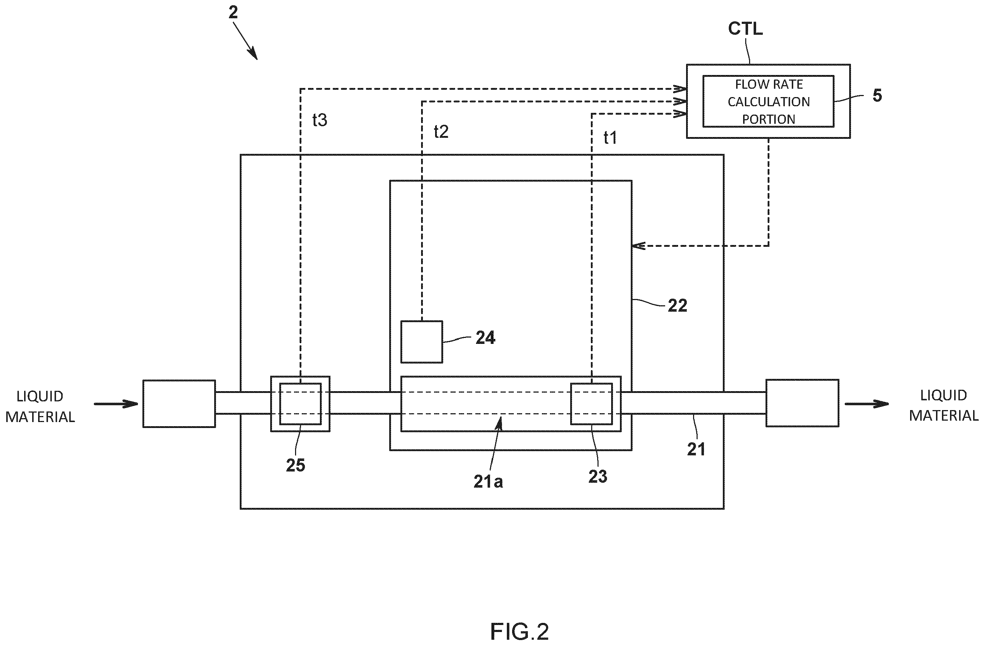

The fluid flow rate sensor 2 is a thermal flow rate sensor. As is shown in FIG. 2, this fluid flow rate sensor 2 is provided with a cooling device 22 such as, for example, a Peltier element or the like that cools a portion of a flow pipe 21 through which a liquid material is flowing, a first temperature detection portion 23 that detects a temperature of a cooling area 21a of the flow pipe 21, a second temperature detection portion 24 for feedback control that detects a temperature of a portion located away from the flow pipe 21 in the cooling device 22, and a third temperature detection portion 25 that detects a temperature of a non-cooling area on the upstream side of the cooling area 21a of the flow pipe 21. The cooling device 22 is controlled in such a way that a difference between a detection temperature t2 detected by the second temperature detection portion 24 and a detection temperature t3 detected by the third temperature detection portion 25 (i.e., t3 - t2) remains constant. In addition, temperature changes when a liquid material is flowing through the flow pipe 21 are measured by the first temperature detection portion 23, and the flow rate of the liquid material is calculated based on a temperature difference between the detection temperature t2 detected by the second temperature detection portion 24 and a detection temperature t1 detected by the first temperature detection portion 23 (i.e., t1 - t2).

Here, the control of the cooling device 22 described above is performed by the control unit CTL, and the calculation of the flow rate described above is performed by a flow rate calculation portion 5 of the control unit CTL. Note that the calculation portion 5 of the present embodiment is provided in the control unit CTL, however, it is also possible for the calculation portion 5 to be provided separately from the control unit CTL.

Moreover, a mass flow controller 203 that controls a flow rate of a carrier gas such as nitrogen or the like that is supplied to the vaporizer 201 is provided on the carrier gas supply line L2. The mass flow controller 203 is formed by packaging a valve, a flow rate sensor, and a control board (not shown in the drawings) together into a single unit, and the valve aperture is controlled by means of feedback control which is based on a deviation between a set flow rate and a flow rate measured by a flow rate sensor. The mass flow controller 203 of the present embodiment performs flow rate control such that, for example, carrier gas is supplied at a uniform flow rate to the vaporizer 201.

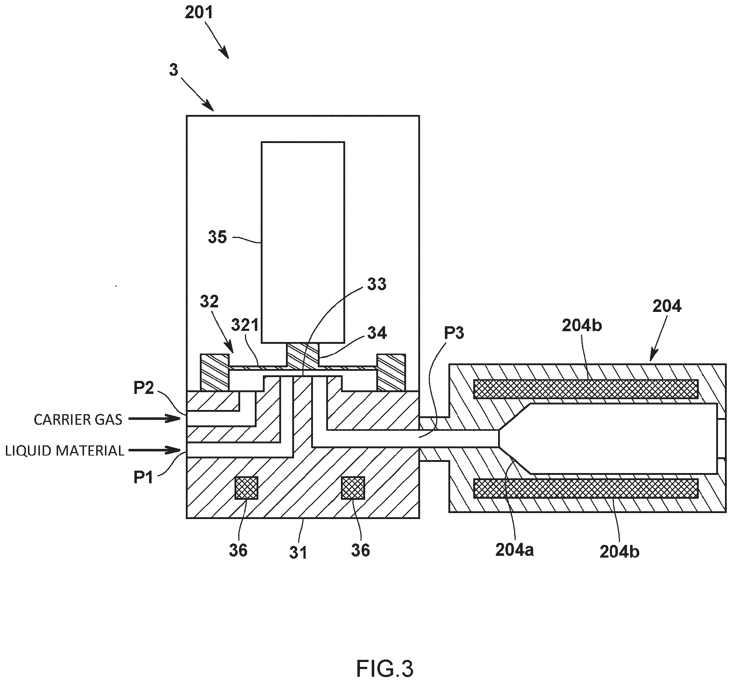

As is shown in FIG. 3, the vaporizer 201 is provided with a fluid control valve 3, and with a vaporizing portion 204 that is located on the downstream side of the fluid control valve 3.

The fluid control valve 3 is a piezo valve that utilizes a piezo stack. More specifically, the fluid control valve 3 is provided with a metal body 31 having a flow path formed in an interior thereof and a valve seat 33 formed on an upper surface thereof, a metal diaphragm structure 32 that is provided on the upper surface of the body 31 and is equipped with a diaphragm 321 that functions as a valve body 34 that moves towards or away from the valve seat 33, and a piezo actuator 35 which is formed by a piezo stack that drives the diaphragm 321. The flow rate of the liquid material is controlled as a result of the valve aperture between the valve seat 33 and the valve body 34 being adjusted by the piezo actuator 35.

A liquid intake port P1 through which a liquid material is introduced from the liquid supply line L1 into the interior of the body 31, and a gas intake port P2 through which a carrier gas is introduced into the interior of the body 31 are formed in a side surface of the body 31 of the fluid control valve 3. The liquid material and carrier gas that are introduced into the interior of the body 31 pass through the internal flow path therein, and flow into a gas-liquid mixing portion, which is a space formed between the upper surface of the body 31 and the diaphragm structure 32, where they are mixed together. The gas-liquid mixture formed when the liquid material and carrier gas are mixed together passes further along the internal flow path and is discharged to the outside through a discharge port P3 that is formed in a side surface of the body 31. The discharge port P3 of the control valve 3 is connected to an intake port of the vaporizing portion 204 that is positioned adjacent thereto on the downstream side.

In addition, a valve heater 36 is built into the interior of the body 31, and is adjusted so that the interior of the fluid control valve 3 is maintained at a predetermined temperature. For example, the temperature of the fluid control valve 3 is set to a temperature that is higher than that of the liquid material inside the tank 202, but is lower than that of the vaporizing portion 204 where the liquid material is vaporized. In other words, the temperature adjusted by the valve heater 36 is set such that the liquid material to be introduced into the vaporizing portion 204 is preheated beforehand by the fluid control valve 3 in order to make it easier to vaporize, but such that the liquid material is not vaporized in the fluid control valve 3.

The vaporizing portion 204 is formed so as to create a material gas by heating and decompressing a gas-liquid mixture so that this gas-liquid mixture is vaporized. More specifically, the vaporizing portion 204 is provided with a nozzle 204a whose flow path diameter becomes progressively wider towards the downstream side thereof, and with a vaporizing heater 204b that heats the gas-liquid mixture flowing through the nozzle 204a.

The control unit CTL is a computer that is equipped, for example, with a CPU, internal memory, input/output interfaces, A/D converters, and communication devices and the like. The control unit CTL performs the functions of the valve control unit 4 described below as a result of the CPU and various peripheral devices operating in collaboration with each other in accordance with a fluid control program stored in the internal memory.

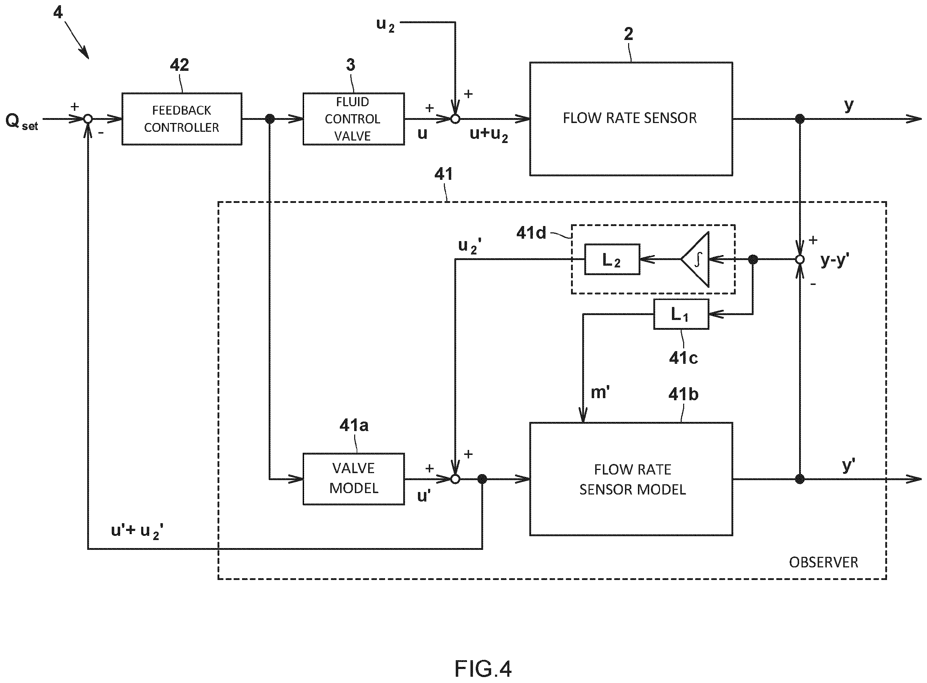

As is shown in FIG. 4, the valve control unit 4 is provided with an observer 41 that includes models for each of the fluid control valve 3 and the flow rate sensor 2, and with a feedback controller 42 that performs feedback control of the fluid control valve 3 based on estimation values obtained by the observer 41.

The observer 41 calculates the estimation values to be fed back into the feedback controller 42, and includes a valve model 41a that estimates a valve flow rate (u), which is the flow rate of the fluid control valve 3, based on a control signal (for example, a drive voltage) input into the fluid control valve 3, and a flow rate sensor model 41b that simulates the flow rate sensor 2.

Here, the valve model 41a simulates the behavior or characteristics of the response speed or the like of the fluid control valve 3, and can take the form of relational data such as, for example, a lookup table or the like that shows a relationship between at least a control signal (i.e., the drive voltage) and the valve flow rate. The flow rate sensor model 41b simulates the behavior or characteristics of the response speed or the like of the thermal flow rate sensor 2.

The observer 41 determines model error estimation values m' obtained by estimating model errors m in the flow rate sensor model 41b relative to the flow rate sensor 2, and flow rate error estimation values u₂' obtained by estimating a flow rate error u₂ caused by changes in the fluid control valve 3 based on a deviation y - y' between flow rate measurement values y output by the flow rate sensor 2 and flow rate estimation values y' output by the flow rate sensor model 41b.

In addition, the observer 41 inputs the model error estimation values m' into the flow rate sensor model 41b as feedback, and then feeds the estimation values obtained based on the flow rate error estimation values u₂' and on the valve flow rate estimation values u' output by the valve model 41a back into the feedback controller 42. The observer 41 of the present embodiment performs feedback by superimposing the flow rate error estimation values u₂' on the valve flow rate estimation values u' output by the valve model 41a. Note that it is also possible for the observer 41 to multiply the flow rate error estimation values u₂' by a gain and to then superimpose the result on the valve flow rate estimation values u'. Moreover, it is also possible for the observer to filter the flow rate error estimation values u₂', or to filter the model error estimation values m'. Furthermore, in addition to estimation values obtained by superimposing the flow rate error estimation values u₂' and the valve flow rate estimation values u', it is also possible for the observer 41 to feed back other estimation values such as estimation values, for example, of the drive voltage or the like obtained based on the flow rate error estimation values u₂' and the valve flow rate estimation values u' output by the valve model 41a. In addition to these, it is also possible for a gain or filter to be applied to the estimation values fed back from the observer 41 to the feedback controller 42.

Here, the observer 41 is provided with a first observer gain portion 41c that outputs the model error estimation values m', and with a second observer gain portion 41d that outputs the flow rate error estimation values u₂'.

The first observer gain portion 41c outputs the model error estimation values m' by multiplying the deviation y - y' between the flow rate measurement values y output by the flow rate sensor 2 and the flow rate estimation values y' output by the flow rate sensor model 41b by a first observer gain L₁.

The second observer gain portion 41d outputs the flow rate error estimation values u₂' by integrating the deviation y - y' between the flow rate measurement values y output by the flow rate sensor 2 and the flow rate estimation values y' output by the flow rate sensor model 41b using an integrator, and then multiplying the results by a second observer gain L₂.

Here, the first observer gain L₁ compensates errors in the flow rate sensor model 41b relative to the flow rate sensor 2. The second observer gain L₂ estimates the flow rate errors u₂ that are caused by changes in the fluid control valve. These flow rate errors u₂ are generated by hysteresis in the piezo stack, deterioration over time, or turbulence such as effects from peripheral heat and the like.

These gains L₁ and L₂ are each set values, and large absolute values are set on the negative side relative to a control gain of the feedback controller 42. It is also possible for the gains L₁ and L₂ to be determined by means of an optimization calculation in such a way that the deviation y - y' between the flow rate measurement values y output by the flow rate sensor 2 and the flow rate estimation values y' output by the flow rate sensor model 41b are made to converge within a predetermined time (for example, within one second).

The feedback controller 42 performs feedback control of the fluid control valve 3 based on the estimation values obtained by the observer 41. Here, the feedback controller 42 performs feedback control of the fluid control valve 3 based on the valve flow rate estimation values u' + u₂' obtained by superimposing the flow rate error estimation values u₂' on the valve flow rate estimation values u'. In other words, the feedback controller 42 performs feedback control of the fluid control valve 3 such that the valve flow rate estimation values u' + u₂' become a set flow rate Qₛₑₜ. The feedback controller 42 of the present embodiment performs integration control (I control), for example, however, it is also possible for a controller that performs PID control to be used, or for a controller that performs state feedback control or model predictive control (MPC) to be used.

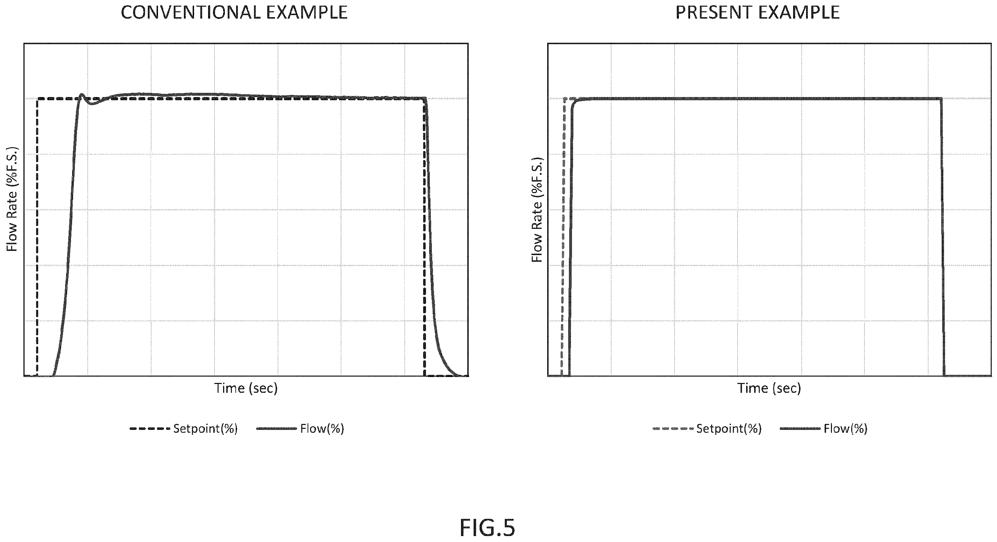

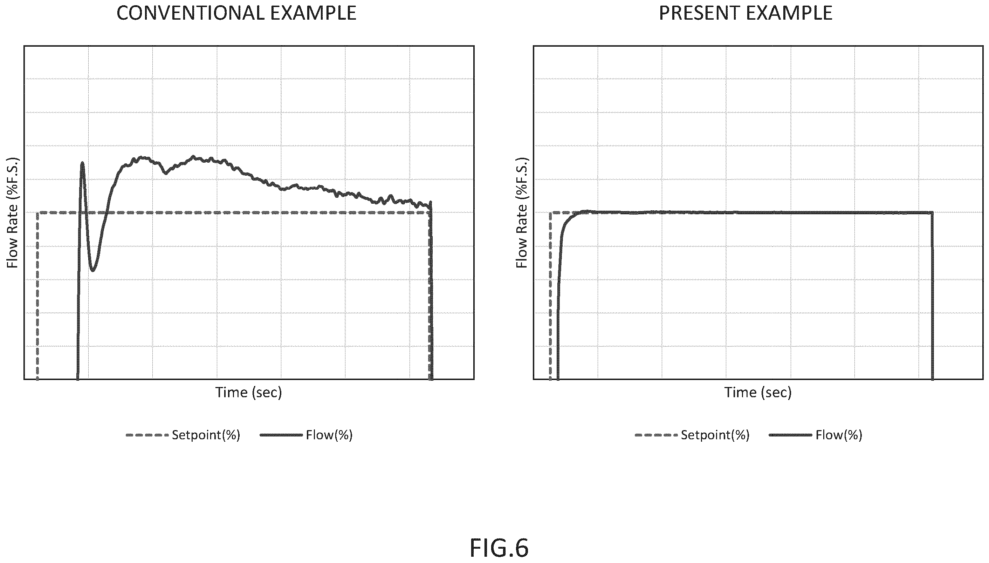

Next, verification results of the flow rate control performed by a fluid control device having the above-described structure will be described with reference to FIG. 5 and FIG. 6.

The 'conventional examples' shown in FIG. 5 and FIG. 6 show a case in which feedback control of a fluid control valve is performed based on a measurement flow rate from a flow rate sensor. The 'present examples' shown therein show a case in which feedback control of the fluid control valve 3 is performed based on a valve flow rate estimation value on which a flow rate error estimation value obtained using the above-described observer 41 has been superimposed.

In this verification, response times of the flow rate in a case in which the set flow rate was varied from 0% to 100% (full-scale flow rate) were measured. Note that the response times in the 'conventional examples' were measured using measurement flow rates from a flow rate sensor, while the response times in the 'present examples' were measured using valve flow rate estimation values on which flow rate error estimation values obtained using the observer 41 were superimposed. As can be seen from FIG. 5 and FIG. 6, the response time is significantly quicker compared to the conventional examples.

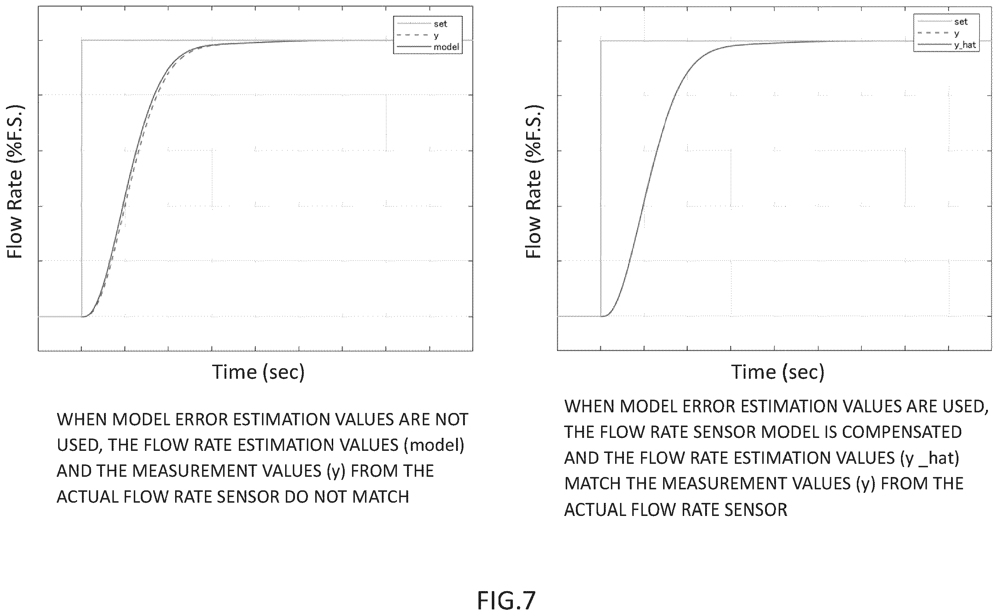

Next, an effect obtained when the model error estimation value m' was fed back into the flow rate sensor model 41b is shown in FIG. 7. In a case in which the model error estimation value m' is not used, the flow rate estimation value (model) and the measurement flow rate (y) from the actual flow rate sensor 2 do not match each other. In contrast, in a case in which the model error estimation value m' is used, any model error in the flow rate sensor model is compensated, so that the flow rate estimation value y' (shown in FIG. 7 as y_hat) does match the measurement flow rate (y) from the actual flow rate sensor 2.

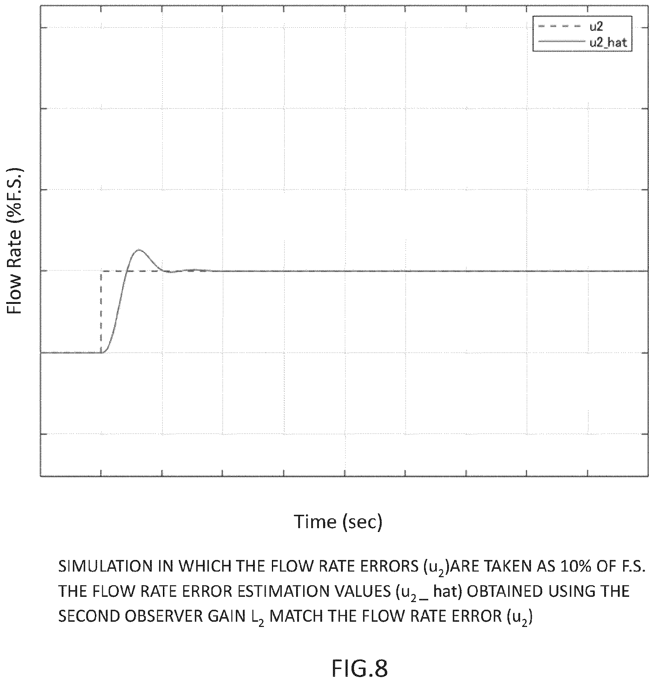

Moreover, FIG. 8 shows how accurately the flow rate error estimation value u₂' is able to reflect the flow rate errors u₂ caused by changes in the fluid control valve 3. In a case in which the flow rate error (u₂) is set to 10% of a full-scale flow rate, the flow rate error estimation value u₂' (shown in FIG. 8 as u₂_hat) obtained using the second observer gain L₂ matches the flow rate error (u₂).

### [Effects Obtained from the Present Embodiment]

According to the fluid control device 100 of the present embodiment that is formed in the manner described above, by using the observer 41 that includes the valve model 41a that estimates the valve flow rate u, which is the flow rate of the fluid control valve 3, and the flow rate sensor model 41b that simulates the flow rate sensor 2, it is possible to achieve a fast response. Moreover, because both the model error estimation values m' obtained by estimating model errors m in the flow rate sensor model relative to the flow rate sensor 2, and flow rate error estimation values u₂' obtained by estimating a flow rate error u₂ caused by changes in the fluid control valve 3 are each determined, and model error estimation values are input into the flow rate sensor model, and the flow rate error estimation values u₂' are superimposed on the valve flow rate estimation values u' output by the valve model 41a, it is possible to accurately compensate both the flow rate errors u₂ caused by changes in the fluid control valve 3, and the model errors m in the flow rate sensor model 41b relative to the flow rate sensor 2. As a result, it is possible to perform accurate flow rate control while also achieving a fast response.

### [Additional Embodiments]

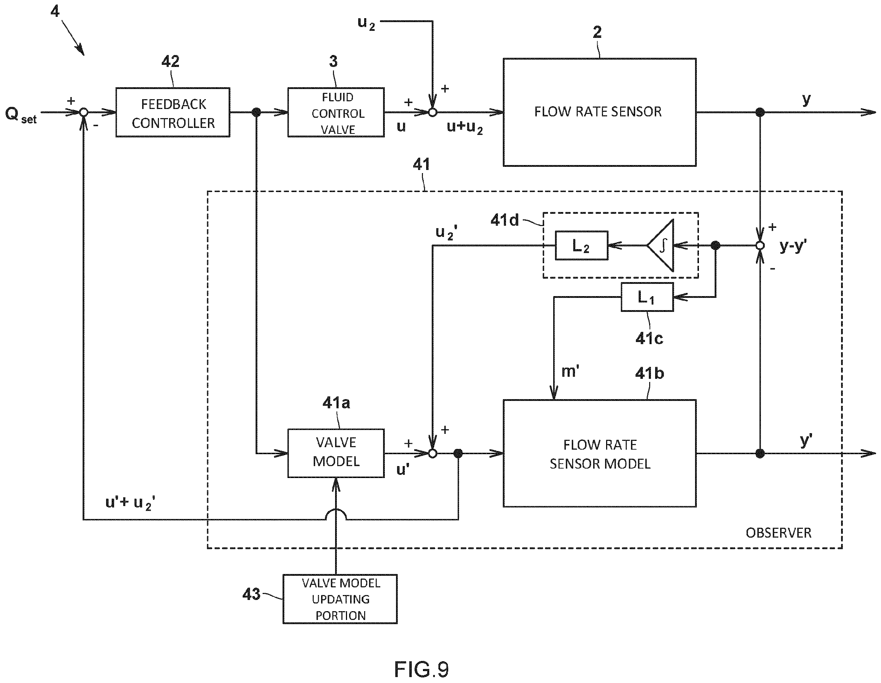

As is shown in FIG. 9, in addition to the above-described embodiment, it is also possible for there to be additionally provided a valve model update portion 43 that updates the valve model 41a of the observer 41. This valve model update portion 43 updates the valve model 41 so as to correspond to changes in the fluid control valve 3 caused by deterioration over time or by the effects from heat and the like. The valve model 41a may be updated by being selected by the valve model update portion 43 from a plurality of previously prepared valve models 41a or, alternatively, the parameters contained in the valve model 41a may be updated so as to correspond to changes in the fluid control valve 3.

Moreover, it is also possible for optimal gains L₁ and L₂ to be determined as the first observer gain L₁ and the second observer gain L₂ by solving an algebraic Riccati equation for each sampling.

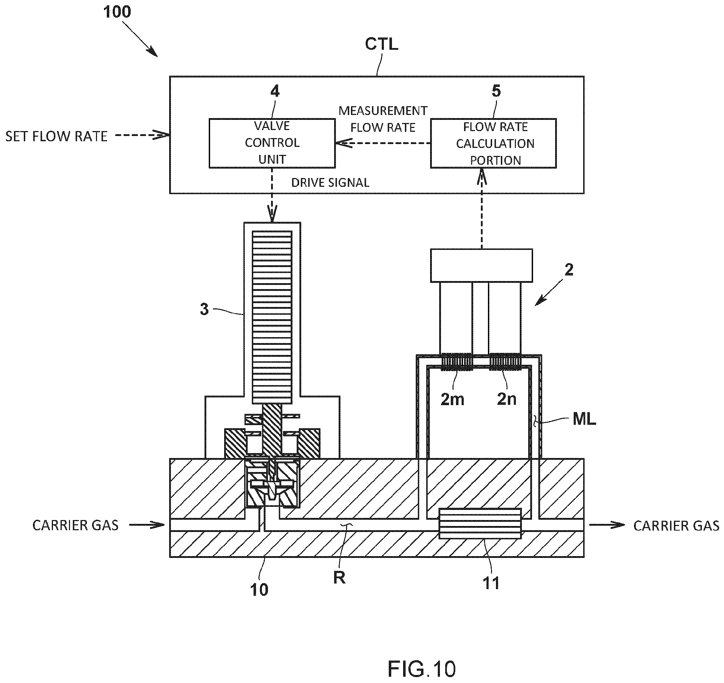

Furthermore, as is shown in FIG. 10, it is also possible for the fluid control device 100 to be what is known as a thermal mass flow controller, and to be provided with a fluid control valve 3 that controls a fluid, a flow rate sensor 2 that measures the flow rate of a fluid, and a valve control unit 4 that controls the fluid control valve 3. Note that the structure of this valve control unit 4 is the same as in the above-described embodiment.

The fluid control valve 3 is a piezo valve that employs a piezo stack. This fluid control valve 3 is mounted on a flow path block 10, inside which is formed an internal flow path R, and controls the flow rate of a fluid flowing through this internal flow path R.

The flow rate sensor 2 is a thermal flow rate sensor that employs a heating resistor. This flow rate sensor 2 is provided on a measurement flow path ML that forms a bypass on the upstream side and the downstream side of a laminar flow element 11 provided on the internal flow path R, and includes an upstream-side heating resistor 2m and a downstream-side resistor 2n that are provided on the measurement flow path ML. The flow rate sensor 2 includes a flow rate calculation portion 5 that measures the flow rate flowing through the internal flow path R from a difference between the resistance values of the respective heating resistors 2m and 2n. Note that the flow rate calculation portion 5 is provided in the control unit CTL together with the valve control unit 4, however, it may also be disposed separately from the control unit CTL.

Furthermore, it should be understood that the present invention is not limited to the above-described embodiments, and that various modifications and the like may be made thereto insofar as they do not depart from the scope of the present invention.

### Reference Characters List

- 100: Fluid Control Device
- 2: Flow Rate Sensor
- 3: Fluid Control Valve
- 4: Valve Control Unit (Control Unit)
- 41: Observer
- 41a: Valve Model
- 41b: Flow Rate Sensor Model
- 41c: First Observer Gain Portion
- 41d: Second Observer Gain Portion
- 42: Feedback Controller
- 43: Valve Model Updating Portion

## Claims

1. A control unit (4) for a fluid control device (100) having a fluid control valve (3) that is configured to control a fluid, and a flow rate sensor (2) that is configured to measure a flow rate of the fluid, comprising:
an observer (41) that includes a valve model (41a) that is configured to estimate a valve flow rate (u), which is a flow rate passing through the fluid control valve (3), and output a valve flow rate estimation value (u') based on a control signal input into the fluid control valve (3), and that includes a flow rate sensor model (41b) that is configured to simulate the flow rate sensor (2); and
a feedback controller (42), wherein,
based on a deviation between a flow rate measurement value (y) output by the flow rate sensor (2) and a flow rate estimation value (y') output by the flow rate sensor model (41b), the observer (41) is configured to determine a model error estimation value (m') which is an estimation of a model error in the flow rate sensor model (41b) relative to the flow rate sensor (2), and a flow rate error estimation value (u₂') which is an estimation of a flow rate error caused by a change in the fluid control valve (3), and input the model error estimation value (m') into the flow rate sensor model (41b), and then output an estimation value (u' + u₂') which is obtained by superimposing the flow rate error estimation value (u₂') on the valve flow rate estimation value (u') and further input this estimation value (u' + u₂') into the flow rate sensor model (41b), and
the feedback controller (42) is configured to perform feedback control of the fluid control valve (3) based on the estimation value (u' + u₂') obtained by the observer (41).

2. The control unit (4) according to claim 1, wherein the observer (41) comprises:
a first observer gain portion (41c) that is configured to multiply a deviation between the flow rate measurement value (y) output by the flow rate sensor (2) and the flow rate estimation value (y') output by the flow rate sensor model (41b) by a first observer gain (L₁), and then output the model error estimation value (m'); and
a second observer gain portion (41d) that is configured to multiply a deviation between the flow rate measurement value (y) output by the flow rate sensor (2) and the flow rate estimation value (y') output by the flow rate sensor model (41b) by a second observer gain (L₂), and then output the flow rate error estimation value (u₂').

3. A fluid control device (100) comprising:
a fluid control valve (3) that is configured to control a fluid;
a flow rate sensor (2) that is configured to measure a flow rate of the fluid; and
the control unit (4) according to claim 1 or 2.

4. The fluid control device (100) according to claim 3, further comprising a valve model update portion (43) that is configured to update the valve model (41a) of the observer (41).

5. The fluid control device (100) according to claim 3 or 4, wherein the fluid control valve (3) is a piezo valve that utilizes a piezo stack.

6. The fluid control device (100) according to any one of claims 3 through 5, wherein the flow rate sensor (2) is a thermal flow rate sensor.

7. A fluid control method that employs a fluid control device (100) having a fluid control valve (3) that is configured to control a fluid, and a flow rate sensor (2) that is configured to measure a flow rate of the fluid, in which:
a valve model (41a) included in an observer (41) estimates a valve flow rate (u), which is a flow rate passing through the fluid control valve (3), and outputs a valve flow rate estimation value (u') based on a control signal input into the fluid control valve (3), and a flow rate sensor model (41b) included in the observer (41) simulates the flow rate sensor (2);
based on a deviation between a flow rate measurement value (y) output by the flow rate sensor (2) and a flow rate estimation value (y') output by the flow rate sensor model (41b), a model error estimation value (m') which is an estimation of a model error in the flow rate sensor model (41b) relative to the flow rate sensor (2), and a flow rate error estimation value (u₂') which is an estimation of a flow rate error caused by a change in the fluid control valve (3) are determined by the observer (41) and the model error estimation value (m') is then input by the observer (41) into the flow rate sensor model (41b), and an estimation value (u' + u₂'), which is obtained by superimposing the flow rate error estimation value (u₂') on the valve flow rate estimation value (u'), is then output by the observer (41) and further input into the flow rate sensor model (41b); and
feedback control is performed by a feedback controller (42) on the fluid control valve (3) based on the estimation value (u' + u₂') obtained by the observer (41).

8. A fluid control program which, when the fluid control program is executed by a computer, causes the computer to carry out the method according to claim 7.

## Patentansprüche

1. Eine Regeleinheit (4) für eine Fluidregelvorrichtung (100), die Folgendes aufweist: ein Fluidregelventil (3), das dazu konfiguriert ist, ein Fluid zu regeln, und einen Durchflusssensor (2), der dazu konfiguriert ist, einen Durchfluss des Fluids zu messen, umfassend:
einen Beobachter (41), der ein Ventilmodell (41a) beinhaltet, das dazu konfiguriert ist, einen Ventildurchfluss (u), der ein durch das Fluidregelventil (3) hindurchtretender Durchfluss ist, zu schätzen, und einen Ventildurchfluss-Schätzwert (u') auf der Grundlage eines in das Fluidregelventil (3) eingegebenen Steuersignals auszugeben, und der ein Durchflusssensormodell (41b) beinhaltet, das dazu konfiguriert ist, den Durchflusssensor (2) zu simulieren; und
einen Rückkopplungsregler (42), wobei,
auf der Grundlage einer Abweichung zwischen einem vom Durchflusssensor (2) ausgegebenen Durchflussmesswert (y) und einem vom Durchflusssensormodell (41b) ausgegebenen Durchflussschätzwert (y'),
der Beobachter (41) dazu konfiguriert ist, einen Modellfehler-Schätzwert (m') zu ermitteln, der eine Schätzung eines Modellfehlers im Durchflusssensormodell (41b) relativ zum Durchflusssensor (2) darstellt, sowie einen Durchflussfehler-Schätzwert (u₂'), der eine Schätzung eines durch eine Änderung am Fluidregelventil (3) verursachten Durchflussfehlers darstellt, und den Modellfehler-Schätzwert (m') in das Durchflusssensormodell (41b) einzugeben, und anschließend einen Schätzwert (u' + u₂') auszugeben, der durch Überlagern des Durchflussfehler-Schätzwerts (u₂') mit dem Ventildurchfluss-Schätzwert (u') erhalten wird, und ferner diesen Schätzwert (u' + u₂') in das Durchflusssensormodell (41b) einzugeben, und wobei
der Rückkopplungsregler (42) dazu konfiguriert ist, eine Rückkopplungsregelung des Fluidregelventils (3) auf der Grundlage des durch den Beobachter (41) ermittelten Schätzwerts (u' + u₂') durchzuführen.

2. Die Regeleinheit (4) nach Anspruch 1, wobei der Beobachter (41) Folgendes umfasst:
einen ersten Beobachter-Verstärkungsabschnitt (41c), der dazu konfiguriert ist, eine Abweichung zwischen dem vom Durchflusssensor (2) ausgegebenen Durchflussmesswert (y) und dem vom Durchflusssensormodell (41b) ausgegebenen Durchflussschätzwert (y') mit einer ersten Beobachterverstärkung (L₁) zu multiplizieren und anschließend den Modellfehler-Schätzwert (m') auszugeben; und
einen zweiten Beobachter-Verstärkungsabschnitt (41d), der dazu konfiguriert ist, eine Abweichung zwischen dem vom Durchflusssensor (2) ausgegebenen Durchflussmesswert (y) und dem vom Durchflusssensormodell (41b) ausgegebenen Durchflussschätzwert (y') mit einer zweiten BeobachterVerstärkung (L₂) zu multiplizieren und anschließend den Durchflussfehler-Schätzwert (u₂') auszugeben.

3. Eine Fluidregelvorrichtung (100), die Folgendes umfasst:
ein Fluidregelventil (3), das dazu konfiguriert ist, ein Fluid zu regeln;
einen Durchflusssensor (2), der dazu konfiguriert ist, einen Durchfluss des Fluids zu messen; und
die Regeleinheit (4) nach Anspruch 1 oder 2.

4. Die Fluidregelvorrichtung (100) nach Anspruch 3, ferner umfassend einen Ventilmodell-Aktualisierungsabschnitt (43), der dazu konfiguriert ist, das Ventilmodell (41a) des Beobachters (41) zu aktualisieren.

5. Die Fluidregelvorrichtung (100) nach Anspruch 3 oder 4, wobei das Fluidregelventil (3) ein Piezo-Ventil ist, das einen Piezostapel verwendet.

6. Die Fluidregelvorrichtung (100) nach irgendeinem der Ansprüche von 3 bis 5, wobei der Durchflusssensor (2) ein thermischer Durchflusssensor ist.

7. Ein Fluidregelverfahren, das eine Fluidregelvorrichtung (100) verwendet, die Folgendes aufweist: ein Fluidregelventil (3), das dazu konfiguriert ist, ein Fluid zu regeln, und einen Durchflusssensor (2), der dazu konfiguriert ist, einen Durchfluss des Fluids zu messen, wobei:
ein in einem Beobachter (41) enthaltenes Ventilmodell (41a) einen Ventildurchfluss (u) schätzt, der ein durch das Fluidregelventil (3) hindurchtretender Durchfluss ist, und auf der Grundlage eines in das Fluidregelventil (3) eingegebenen Steuersignals einen Ventildurchfluss-Schätzwert (u') ausgibt, und wobei ein im Beobachter (41) enthaltenes Durchflusssensormodell (41b) den Durchflusssensor (2) simuliert;
auf der Grundlage einer Abweichung zwischen einem vom Durchflusssensor (2) ausgegebenen Durchflussmesswert (y) und einem vom Durchflusssensormodell (41b) ausgegebenen Durchflussschätzwert (y'), Folgendes vom Beobachter (41) ermittelt wird: ein Modellfehler-Schätzwert (m'), der eine Schätzung eines Modellfehlers im Durchflusssensormodell (41b) relativ zum Durchflusssensor (2) darstellt, sowie einen Durchflussfehler-Schätzwert (u₂'), der eine Schätzung eines durch eine Änderung am Fluidregelventil (3) verursachten Durchflussfehlers darstellt, und wobei der Modellfehler-Schätzwert (m') dann vom Beobachter (41) in das Durchflusssensormodell (41b) eingeben wird, und wobei anschließend einen Schätzwert (u' + u₂'), der durch Überlagern des Durchflussfehler-Schätzwerts (u₂') mit dem Ventildurchfluss-Schätzwert (u') erhalten wird, vom Beobachter (41) ausgeben und ferner in das Durchflusssensormodell (41b) eingegeben wird; und wobei
eine Rückkopplungsregelung, durch den Rückkopplungsregler (42), am Fluidregelventil (3) auf der Grundlage des durch den Beobachter (41) ermittelten Schätzwerts (u' + u2') durchgeführt wird.

8. Ein Fluidregelungsprogramm, das, wenn das Fluidregelungsprogramm durch einen Computer ausgeführt wird, den Computer dazu veranlasst, das Verfahren gemäß Anspruch 7 durchzuführen.

## Revendications

1. Une unité de régulation (4) pour un dispositif de régulation de fluide (100) présentant une vanne de régulation de fluide (3) configurée pour réguler un fluide, et un capteur de débit (2) configuré pour mesurer le débit dudit fluide, comprenant :
un observateur (41) qui inclut un modèle de vanne (41a) configuré pour estimer un débit de vanne (u), qui est un débit traversant la vanne de régulation de fluide (3), et pour fournir une valeur d'estimation de débit de vanne (u') sur la base d'un signal de commande appliqué à la vanne de régulation de fluide (3), et qui inclut un modèle de capteur de débit (41b) configuré pour simuler le capteur de débit (2) ; et
un régulateur à rétroaction (42), sachant que,
sur la base d'un écart entre une valeur de mesure de débit (y) fournie par le capteur de débit (2), et une valeur d'estimation de débit (y') fournie par le modèle de capteur de débit (41b), l'observateur (41) est configuré pour déterminer une valeur d'estimation d'erreur de modèle (m') qui est une estimation d'une erreur de modèle dans le modèle de capteur de débit (41b) par rapport au capteur de débit (2), ainsi qu'une valeur d'estimation d'erreur de débit (u₂') qui est une estimation d'une erreur de débit provoquée par une variation de la vanne de régulation de fluide (3), et pour entrer la valeur d'estimation d'erreur de modèle (m') dans le modèle de capteur de débit (41b), puis pour fournir une valeur d'estimation (u' + u₂') obtenue en superposant la valeur d'estimation d'erreur de débit (u₂') à la valeur d'estimation de débit de la vanne (u'), et pour introduire en outre cette valeur d'estimation (u' + u₂') dans le modèle de capteur de débit (41b), et que
le régulateur à rétroaction (42) est configuré pour effectuer une régulation à rétroaction de la vanne de régulation de fluide (3) sur la base de la valeur estimée (u' + u₂') obtenue par l'observateur (41).

2. L'unité de régulation (4) d'après la revendication 1, sachant que l'observateur (41) comprend :
une première portion de gain d'observateur (41c) qui est configurée pour multiplier un écart entre la valeur de mesure de débit (y) fournie par le capteur de débit (2) et la valeur d'estimation de débit (y') fournie par le modèle de capteur de débit (41b) par un premier gain d'observateur (L₁), puis pour fournir la valeur d'estimation d'erreur de modèle (m') ; et
une deuxième portion de gain d'observateur (41d) qui est configurée pour multiplier un écart entre la valeur de mesure de débit (y) fournie par le capteur de débit (2) et la valeur d'estimation de débit (y') fournie par le modèle de capteur de débit (41b) par un deuxième gain d'observateur (L₂), puis pour fournir la valeur d'estimation d'erreur de débit (u₂').

3. Un dispositif de régulation de fluide (100) comprenant :
une vanne de régulation de fluide (3) configurée pour réguler un fluide ;
un capteur de débit (2) configuré pour mesurer un débit du fluide ; et
l'unité de régulation (4) d'après la revendication 1 ou 2.

4. Le dispositif de régulation de fluide (100) d'après la revendication 3, comprenant en outre une portion de mise à jour du modèle de vanne (43) configurée pour mettre à jour le modèle de vanne (41a) de l'observateur (41).

5. Le dispositif de régulation de fluide (100) d'après la revendication 3 ou 4, sachant que la vanne de régulation de fluide (3) est une vanne piézoélectrique utilisant un empilement piézoélectrique.

6. Le dispositif de régulation de fluide (100) d'après l'une quelconque des revendications de 3 à 5, sachant que le capteur de débit (2) est un capteur de débit thermique.

7. Un procédé de régulation de fluide qui utilise un dispositif de régulation de fluide (100) présentant une vanne de régulation de fluide (3) configurée pour réguler un fluide, ainsi qu'un capteur de débit (2) configuré pour mesurer un débit du fluide, sachant que :
un modèle de vanne (41a) inclut dans un observateur (41) estime un débit de vanne (u), qui est le débit traversant la vanne de régulation de fluide (3), et fournit une valeur d'estimation de débit de vanne (u') sur la base d'un signal de commande entré dans la vanne de régulation de fluide (3), et qu'un modèle de capteur de débit (41b) inclus dans l'observateur (41) simule le capteur de débit (2) ;
sur la base d'un écart entre une valeur de mesure de débit (y) fournie par le capteur de débit (2) et une valeur d'estimation de débit (y') fournie par le modèle de capteur de débit (41b), une valeur d'estimation d'erreur de modèle (m'), qui est une estimation d'une erreur de modèle dans le modèle de capteur de débit (41b) par rapport au capteur de débit (2), et une valeur d'estimation d'erreur de débit (u₂'), qui est une estimation d'une erreur de débit provoquée par une variation de la vanne de régulation de fluide (3), sont déterminées par l'observateur (41) et que la valeur d'estimation d'erreur de modèle (m') est ensuite introduite par l'observateur (41) dans le modèle de capteur de débit (41b), et qu'une valeur d'estimation (u' + u₂'), obtenue en superposant la valeur d'estimation d'erreur de débit (u₂') à la valeur d'estimation de débit de vanne (u') est ensuite émise par l'observateur (41) et en outre introduite dans le modèle de capteur de débit (41b) ; et que
une régulation à rétroaction est effectuée par un régulateur à rétroaction (42) sur la vanne de régulation de fluide (3) sur la base de la valeur d'estimation (u' + u₂') obtenue par l'observateur (41).

8. Un programme de régulation de fluide qui, lorsqu'il est exécuté par un ordinateur, amène l'ordinateur à mettre en œuvre le procédé d'après la revendication 7.
